Europäisches Patentamt

(19) European Patent Office

Office européen des brevets

(11) Veröffentlichungsnummer: **0 021 200**
**A1**

# (12) EUROPÄISCHE PATENTANMELDUNG

(21) Anmeldenummer: 80103168.3

(22) Anmeldetag: 06.06.80

(51) Int. Cl.³: **A 23 G 3/20**, A 23 P 1/00, A 23 J 3/02, A 23 J 3/00

---

(30) Priorität: 27.06.79 DE 2926010

(43) Veröffentlichungstag der Anmeldung: 07.01.81 Patentblatt 81/1

(84) Benannte Vertragsstaaten: **AT BE CH DE FR GB IT LI LU NL SE**

(71) Anmelder: **Meggle Milchindustrie GmbH & Co. KG, Rosenheimer Strasse 10-22, D-8094 Reitmehring (DE)**

(72) Erfinder: **Schröder, Karl, Weiherweg 3, D-8094 Reitmehring (DE)**

(74) Vertreter: **Welckmann, Heinrich, Dipl.-Ing Patentanwälte Dipl.Ing.H.Weickmann et al, Dipl.Phys.Dr.K.Fincke Dipl.Ing.F.A.Weickmann Dipl.Chem.B.Huber, Dr.-Ing.H.Liska Möhlstrasse 22, D-8000 München 86 (DE)**

---

(54) **Snack-Artikel auf Caseinbasis.**

(57) Ein Snack-Artikel weist ein Skelett aus einem geschäumten Proteinprodukt auf Basis Casein mit einem pH-Wert zwischen 5,5 und 8 auf, welches mit einer Alkohol oder/und Zucker enthaltenden wäßrigen Lösung, welche gegebenenfalls noch Geschmacks- bzw. Aromastoffe und Zusatzstoffe enthält und die einen Wassergehalt von 40 bis 75 Gew.% und einen pH-Wert über 4,8 besitzt, getränkt ist und trägt gegebenenfalls einen Überzug aus Konditorüberzugsmasse. Das Skelett ist vorzugsweise durch Extrudieren des Caseinprodukts bei erhöhter Temperatur und Druck in Gegenwart von Inertgas freisetzenden Substanzen hergestellt.

EP 0 021 200 A1

HCH

- 1 -

Snack-Artikel auf Caseinbasis

Die Erfindung betrifft einen Snack-Artikel auf Basis von Casein.

Ein Snack-Artikel auf Basis von Milcheiweiß ist bekannt. So offenbart die DE-OS 27 42 o83 einen derartigen Snack-Artikel, der durch Extrusion einer Mischung von Milchprotein, Aufschlußmitteln und Wasser bei erhöhter Temperatur und erhöhtem Druck in Gegenwart von Inertgas freisetzende Substanzen erhältlich ist und ein formbeständiges geschäumtes Extrudat niedriger spezifischer Dichte darstellt. Derartige Snack-Artikel können auch Ballaststoffe, insbesondere Rohfasern, wie sie in Kleie oder Kartoffeln enthalten sind, oder Fasern aus anderen pflanzlichen Rohstoffen enthalten. Ein wesentliches Merkmal dieser bekannten Snack-Artikel auf Caseinbasis ist ihre spröde knusprige Konsistenz, die zwar einerseits sehr erwünscht ist, andererseits aber die Einsatzmöglichkeiten doch beschränkt. Wenn diese Snack-Artikel nicht ganz trocken sind, so verlieren sie rasch ihre spröde Beschaffenheit und nehmen eine gummiartige bis ledrige, im allgemeinen nicht erwünschte Konsistenz an.

Nunmehr wurde gefunden, daß bei Einhaltung ganz bestimmter kritischer Merkmale derartige Snack-Artikel mit flüssigen, eßbaren Zubereitungen gemischt oder getränkt werden können, ohne daß dabei die erwünschten Konsistenzeigenschaften verlorengehen.

Gegenstand der Erfindung ist daher ein Snack-Artikel, welcher gekennzeichnet ist durch ein Skelett aus einem geschäumten Proteinprodukt auf Basis Casein mit einem pH-Wert zwischen 5,5 und 8, welches mit einer Alkohol oder/und Zucker enthaltenden wäßrigen Lösung, welche gegebenenfalls noch Geschmacks- bzw. Aromastoffe und Zusatzstoffe enthält, einen Wassergehalt von 40 bis 75 Gew.-% und einen pH-Wert über 4,8 aufweist, getränkt ist und gegebenenfalls einen Überzug aus Konditorüberzugsmasse trägt.

Es wurde überraschenderweise gefunden, daß bei Einhaltung der erfindungsgemäßen Merkmale ein Snack-Artikel resultiert, welcher trotz der Tränkung mit einer wäßrigen Lösung die unerwünschte gummiartige bis ledrige Konsistenz nicht aufweist, sondern bei relativ kurzem Biß gut kaubar mit je nach Zusammensetzung mehr härterem oder weicherem Biß ist.

Wesentlich sind dabei die pH-Werte einerseits des geschäumten Proteinskeletts und andererseits der wäßrigen Lösung, mit welcher das Skelett getränkt ist sowie der Wassergehalt der Tränklösung. Wird der Wassergehalt über- oder unterschritten, so erhält man im einen Fall ein zum Zerfallen neigendes, im Biß sehr weiches, auch schmieriges oder leimiges Produkt, während bei einer Unterschreitung eine gummiartige oder ledrige, ebenso unerwünschte Konsistenz auftritt.

Der erfindungsgemäße Snack-Artikel ermöglicht es, die geschmacklichen Variationsmöglichkeiten sehr stark zu erweitern durch die süße oder/und alkoholhaltige flüssige Komponente, die noch durch Zusatz von Geschmacks- oder Aromastoffen vielfältigen Wünschen an Geschmack und Konsistenz angepaßt werden kann. Dabei ist das Skelett bei dem erfindungsgemäßen Snack-Artikel in der Lage, einen sehr erheblichen Anteil an wäßriger Lösung aufzunehmen, die bis zum 4- bis 5-fachen des Skelettanteils betragen kann.

Besonders günstige Eigenschaften werden erhalten, wenn ein Skelett mit einem pH-Wert zwischen etwa 6,o und etwa 7,5 vorliegt. Geeignete Proteinprodukte, die den pH-Wertbedingungen genügen, sind beispielsweise Labcasein oder Caseinate.

Die schaumartige Struktur des Proteinskeletts läßt sich beispielsweise nach den in den DE-OSen 27 42 o83 und 28 45 571 beschriebenen Verfahren oder gemäß P 29 1o 665.8 herstellen. Dabei wird eine Mischung aus Casein, Aufschlußmittel, Wasser und einer unter den Druck- und Temperaturbedingungen eines Extruders Inertgas freisetzenden Substanz bei erhöhter Temperatur durch einen Extruder geschickt und am Auslaß desselben frei expandieren gelassen, wobei man ein geschäumtes Extrudat mit einem spezifischen Gewicht von maximal etwa o,4 $g/cm^3$ erhält. Die Extrusion kann auch mit Mischungen des Caseins oder Caseinats mit einem ballaststoffreichen Produkt, wie Weizenkleie oder anderen Pflanzenfaserprodukten bei bestimmtem Wassergehalt und Temperatur über 1oo$^{o}$C durchgeführt werden. Auch Zusätze anderer Proteine sind möglich, sofern die für die Erfindung charakteristischen Struktureigenschaften gewährleistet sind.

Alternativ kann das Skelett aber auch nach den bekannten Methoden der normalen Backwarenherstellung erzeugt werden, ausgehend von einem mit geeigneten Treibmitteln versetzten Teig, der unter Erzeugung der gewünschten schaumigen Beschaffenheit gebacken wird. Bevorzugt wird jedoch ein Skelett, welches nach den oben beschriebenen Extrusionsmethoden hergestellt wurde. Man kann auch vorgegebene Extrudate zu Granulaten zerkleinern und dann erfindungsgemäß verwenden. Wesentlich ist hierbei die Beibehaltung der geschäumten, saugfähigen Struktur.

Die Tränklösung kann, wie bereits erwähnt, einen Wassergehalt von 4o bis 7o Gew.-% aufweisen. Dies gilt insbesondere für zuckerfreie Tränklösungen, bei denen der Rest im wesentlichen aus Alkohol besteht. Der Alkoholgehalt kann dementsprechend zwischen etwa 6o und 3o % liegen.

Werden zuckerhaltige Tränklösungen, welche zusätzlich noch Alkohol enthalten können, eingesetzt, so wird der Wassergehalt vorzugsweise zwischen etwas engeren Grenzen variiert, zweckmäßig zwischen etwa 55 und etwa 73 Gew.-%. Die besten Ergebnisse bei Verwendung von zuckerhaltigen Lösungen werden bei einem Wassergehalt zwischen 58 und 7o Gew.-% erzielt. Bei alkoholfreien Zuckerlösungen werden 6o bis 65 Gew.-% Wasser besonders bevorzugt.

Der Zuckergehalt wird durch den erforderlichen Wassergehalt und den etwa vorhandenen Alkoholgehalt (unter Alkohol wird hier Äthanol verstanden) schon weitgehend festgelegt. Sehr gute Ergebnisse wurde bei Zuckergehalten bis zu 45 Gew.-% erzielt.

Der erfindungsgemäße Snack-Artikel kann gegebenenfalls einen Überzug aus Konditorüberzugsmasse tragen. Hierunter werden die üblichen Überzugsmassen verstanden, wie sie bei Backwerken, Pralinen und dergleichen, bekannt sind. Ein Überzug mit einer Schokoladenmasse oder einer ähnlichen Zusammensetzung, wie sie beispielsweise für Pralinenüberzüge bekannt sind, verleiht dem erfindungsgemäßen Snack-Artikel einen konfekt- oder pralinenartigen Charakter. Durch das Proteinskelett wird dabei nicht nur eine bisher unbekannte Konsistenz erzielt, sondern gleichzeitig auch die Möglichkeit geschaffen, den Kohlehydratgehalt gegenüber ähnlichen konventionellen Snacks, beispielsweise mit alkoholischen Produkten gefüllten Pralinen, erheblich abzusenken. Ein technologischer Vorzug besteht darin, daß z. B. Pralinen mit erfindungsgemäßer Füllung erhöhte Bruchfestigkeit aufweisen und daß die Flüssigkeit beim Verzehr nicht auslaufen kann.

Als Zucker kommen im Rahmen der Erfindung die üblichen, in Nahrungsmitteln verwendeten Zuckerarten in Betracht. Außer Saccharose, vor allem die Monosaccharide, wie Glucose, ferner Fructose, Lactose, Mannose, Maltose sowie die entsprechenden süßen Zuckeralkohole, wie Sorbit, Mannit, Maltit, Xylit und ähnliche, anstelle von Saccharose verwendbare Zucker.

Typische Beispiele für die Tränklösungen sind alkoholische Destillate, Liköre und ähnliche Produkte.

Der erfindungsgemäße Snack-Artikel kann, wie erwähnt, Geschmacks- und Aromazusätze enthalten. Diese sind dem Fachmann bekannt und brauchen hier nicht näher erläutert zu werden. Desgleichen können konservierende Zusätze enthalten sein. Alternativ weist die Tränklösung einen solchen Alkoholgehalt und Wasseraktivitätswert auf, daß ein Befall durch Mikroorganismen verhindert wird. Vorzugsweise sollte der Alkoholgehalt mindestens 1o % und der Wasseraktivitätswert höchstens o,9 sein, wenn ohne Zusatz von Konservierungsmitteln Beständigkeit gegen bakteriellen Befall erzielt werden soll. Falls auch Beständigkeit gegen andere Mikroorganismen, insbesondere Schimmelpilze, gegeben sein soll, wird ein Alkoholgehalt von mindestens 2o % und ein Wasseraktivitätswert von höchstens o,75 bevorzugt. Der Wasseraktivitätswert wird hier nach der Definition in Anteilen der jeweiligen Sättigungsfeuchte der Luft (= 1) verstanden.

Der erfindungsgemäße Snack-Artikel kann natürlich auch in der bei Lebensmitteln üblichen Weise sterilisiert und steril abgepackt sein, so daß konservierende Eigenschaften an sich nicht erforderlich sind.

Die Herstellung des Snack-Artikels erfolgt durch Tränkung des Proteinproduktskeletts mit der Tränklösung und gegebenenfalls anschließende Herstellung des Überzugs nach den im Konditoreihandwerk üblichen Methoden. Die Herstellung des Skeletts wurde oben bereits näher erläutert.

Die Tränkung kann erfolgen, indem man das geschäumte Gerüst in die Lösungen einlegt, bis sie gründlich vollgesaugt bzw. imprägniert sind, worauf man sie daraus entnimmt und entweder mit einem Überzug versieht oder direkt verpackt. Die Imprägnierung kann für einen beliebigen Zeitraum, vorzugsweise zwischen einigen Stunden und 2 Tagen, durchgeführt werden. Zweckmäßig wird entweder eine Hülle, wie bei Krustenpralinen, aufgebracht oder das Produkt feuchtigkeitsdicht verpackt, beispielsweise in Folie aus Kunststoff oder Metall.

Der erfindungsgemäße Snack-Artikel eignet sich in entsprechender Geschmackszusammenstellung zum Direktverzehr, ferner als Füllung für Süßwaren, für die Herstellung von pralinenartigen Produkten,"Rumkugeln" und dergleichen.

Die folgenden Beispiele erläutern die Erfindung weiter.

B e i s p i e l    1

Mittels eines handelsüblichen Extruders der Firma Brabender wurde ein Gemisch aus 1o kg handelsüblichen Säurecaseins mit einem Wassergehalt von ca. 9 % und 1,4 kg einer 2o %-igen Natriumcarbonatlösung bei ca. 18o$^{O}$C extrudiert.

Düse und Schneidevorrichtung waren so beschaffen, daß die Extrudate eine Kugelform mit einem Durchmesser von ca. 1 cm aufwiesen.

Extrudat-Analyse:
pH 6,5; Wassergehalt 7,5 %; Dichte o,o7 g/ml.

Das geschäumte Produkt wurde ohne Nachtrocknung mit einer Alkohollösung folgender Zusammensetzung getränkt (Lagerzeit 48 Stunden).

25 % Rum (Alkoholgehalt 4o Vol.-%)
25 % Glucosesirup, Typ 121 der Firma Maizena mit einer
     Trockenmasse von 84 %
5o % Wasser,
Gesamtwassergehalt 69 %.

Nach ca. 48 Stunden wurde die überschüssige Alkohollösung abgegossen. Durch Nachwägung konnte festgestellt werden, daß das Eiweißextrudat das Vierfache seines Gewichts der oben genannten Lösung aufgenommen hatte.

Das alkoholgetränkte Skelett wurde in Schokoladehohlkörper gefüllt und anschließend die Öffnung mit flüssiger Schokolade verschlossen. Die so hergestellten Pralinen zeigten einen hervorragenden Geschmack ähnlich wie entsprechend hergestellte Alkohol-Bohnen. Der Genußwert der Alkohol-Eiweiß-Füllung war wegen des erforderlichen verlängerten Kauvorgangs größer als bei der herkömmlichen Pralinenfüllung.

Ein besonderer Vorteil gegenüber normalen Alkohol-Pralinen war auch die bessere Verzehrfähigkeit der erfindungsgemäß hergestellten Praline: Beim Hineinbeißen konnte kein Alkohol überlaufen, weil dieser durch das Eiweiß gebunden war.

Es zeigte sich darüber hinaus als vorteilhaft, daß die erfindungsgemäß hergestellte Praline weniger bruchanfällig war als die herkömmliche.

Beispiel   2

Durchführung analog Beispiel 1, jedoch wurde anstelle des Säurecasein-Gemisches ein Natriumcaseinat verwendet, das einen pH-Wert von 6,7, einen Wassergehalt von 16 % und eine  Kornverteilung von o,1 bis o,6 mm aufwies.

Die erzielten Ergebnisse entsprachen denen von Beispiel 1.

0021200

B e i s p i e l  3

Ein gemäß Beispiel 2 hergestelltes Proteinskelett wurde mit Lösungen von Äthylalkohol oder/und Glucose in Wasser in verschiedener Zusammensetzung 24 Stunden getränkt, überschüssige Lösung abgegossen und der Biß des mit der Lösung getränkten Snack-Artikels geprüft. Die nachstehende Tabelle zeigt die Zusammensetzung der verwendeten Lösungen und den bei der Bißprüfung erhaltenen Befund.

| % Äthylalkohol | Glucose | Wasser | Bißprüfung-Befund |
|---|---|---|---|
| - | 33 | 67 | sehr weich |
| - | 37 | 63 | weich |
| - | 42 | 58 | weich bis hart |
| - | 47 | 53 | hart bis gummiartig |
| 2o | - | 8o | etwas zerfallen, sehr weich |
| 3o | - | 7o | weich |
| 4o | - | 6o | weich |
| 5o | - | 5o | weich bis hart |
| 6o | - | 4o | hart |
| 7o | - | 3o | gummiartig bis ledrig |
| 1o | 16,5 | 73,5 | sehr weich |
| 1o | 21 | 69 | weich |
| 1o | 25 | 65 | weich |
| 1o | 29 | 61 | weich bis hart |
| 5 | 21 | 74 | schmierig, leimig |
| 1o | 21 | 69 | weich |
| 15 | 21 | 64 | weich |
| 2o | 21 | 59 | weich bis hart |
| 25 | 21 | 54 | gummiartig |
| 3o | 21 | 49 | gummiartig |

- 1 -

Patentansprüche

1. Snack-Artikel, gekennzeichnet durch ein Skelett aus einem geschäumten Proteinprodukt auf Basis Casein mit einem pH-Wert zwischen 5,5 und 8, welches mit einer Alkohol oder/und Zucker enthaltenden wäßrigen Lösung, welche gegebenenfalls noch Geschmacks- bzw. Aromastoffe und Zusatzstoffe enthält, einen Wassergehalt von 4o bis 75 Gew.-% und einen pH-Wert über 4,8 aufweist, getränkt ist und gegebenenfalls einen Überzug aus Konditorüberzugsmasse trägt.

2. Snack-Artikel nach Anspruch 1, dadurch gekennzeichnet, daß das Skelett einen pH-Wert von 6,o bis 7,5 aufweist.

3. Snack-Artikel nach einem der vorhergehenden Ansprüche, dadurch gekennzeichnet, daß das Skelett durch Extrudieren des Caseinprodukts bei erhöhter Temperatur und Druck in Gegenwart von Inertgas freisetzenden Substanzen hergestellt ist.

4. Snack-Artikel nach einem der vorhergehenden Ansprüche, dadurch gekennzeichnet,

daß das Skelett einen Gehalt an Rohfaser aufweist.

5. Snack-Artikel nach einem der vorhergehenden An-sprüche, d a d u r c h   g e k e n n z e i c h n e t, daß das Skelett Beimengungen anderer Proteine enthält.

6. Snack-Artikel nach einem der vorhergehenden An-sprüche, d a d u r c h   g e k e n n z e i c h n e t, daß der Wassergehalt bei einer zuckerhaltigen Tränklösung 55 bis 73 Gew.-% beträgt.

7. Snack-Artikel nach Anspruch 6, d a d u r c h   g e k e n n z e i c h n e t , daß der Wassergehalt 58 bis 7o Gew.-% beträgt.

8. Snack-Artikel nach einem der vorhergehenden An-sprüche, d a d u r c h   g e k e n n z e i c h n e t, daß die Tränklösung einen Alkoholgehalt von mindestens 1o % und einen Wasseraktivitätswert von höchstens o,9 aufweist.

9. Snack-Artikel nach Anspruch 8, d a d u r c h   g e k e n n z e i c h n e t , daß der Alkoholgehalt mindestens 2o % und der Wasseraktivitätswert höchstens o,75 ist.

**Europäisches Patentamt**

# EUROPÄISCHER RECHERCHENBERICHT

EP 80 10 3168

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | FR - A - 2 181 641 (FERRERO GmbH)<br><br>* Seite 2, Zeilen 6-9; Seite 2, Zeile 32 - Seite 3, Zeile 26; Beispiel 1 *<br><br>-- | 1 | A 23 G 3/20<br>A 23 P 1/00<br>A 23 J 3/02<br>A 23 J 3/00 |
| D | GB - A - 2 004 174 (MEGGLE MILCH INDUSTRIES)<br><br>* Seite 1, Zeile 107 - Seite 2, Zeile 18; Seite 2, Zeilen 52-59; Seite 3, Zeilen 8-21 *<br><br>& DE - A - 2 742 083<br><br>-- | 1,3,5 | |
| D | DE - A - 2 845 571 (MEGGLE MILCH INDUSTRIES)<br><br>* Beispiel 1 *<br><br>-- | 1-4 | **RECHERCHIERTE SACHGEBIETE (Int. Cl. 3)**<br><br>A 23 G 3/20<br>A 21 D 13/08<br>A 23 P 1/00<br>A 23 J 3/00<br>　　　3/02<br>A 23 G 3/02<br>　　　3/00<br>　　　1/20 |
| | FR - A - 2 361 821 (P. FERRERO & C.S.P.A.)<br><br>* Seite 4, Zeile 20 - Seite 5, Zeile 19; Seite 7, Zeile 10 - Seite 8, Zeile 14; Patentanspruch 1 *<br><br>-- | 1,8-9 | |
| A | GB - A - 2 005 981 (ROUSSEL UCLAF) | | |
| A | US - A - 2 538 202 (F.T. KINBALL)<br><br>---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-10-1980 | SCHUERMANS |

EPA form 1503.1 06.78